# EUROPEAN PATENT SPECIFICATION

(11) **EP 2 626 195 B1**
(45) Date of publication and mention of the grant of the patent: **03.06.2015**
(21) Application number: 13000635.6
(22) Date of filing: 07.02.2013
(51) Int. Cl.: B29D 11/00, B22F 9/04, B22F 9/12

(54) **Plants for fluids comprising nanomaterials**
Anlagen für Flüssigkeiten mit Nanomaterialien
Installation de production de fluides comprenant des nanomatériaux

(30) Priority: 08.02.2012 IT MI20120171
(43) Date of publication of application: 14.08.2013
(60) Divisional application: 14004386.0
(73) Proprietor: Maugeri, Alessio Gerardo, 95128 Catania (CT) (IT)
(72) Inventor: Maugeri, Alessio Gerardo, 95128 Catania (CT) (IT)

(56) References cited:
- WO-A1-2011/136672
- US-A- 5 585 020
- US-A1- 2010 196 192
- US-A1- 2011 189 695

## Description

### Field of the invention

The present invention relates to a plant for the production of a fluid comprising nano-particles obtained by laser ablation in liquid.

A further object of the present invention is a procedure for the production of ophthalmic devices comprising nano-particles. Further objects of the present invention are ophthalmic devices comprising nano-particles.

### State of the art/Background

It is well known the feasibility of obtaining nano-particles by PLAL (Pulsed Laser Ablation in Liquid). This technology consists of directing a laser beam to a solid substrate (target) immersed in a liquid. The laser beam, hitting the target, creates a cloud of ions, atoms and / or small clusters that are in a plasma state, the so-called "plume". By varying the solid substrates and the liquid in which they are immersed and by changing various parameters such as e.g. the wavelength of the laser and the duration of the laser pulse, it is possible to produce a wide variety of new materials. The technology has been successfully used to obtain for example: metallic, semiconducting, ceramic, ferromagnetic and superparamagnetic nano-particles, metallic nano-particles featuring an external oxide shell, nano-diamonds, nano-compounds made of two or more materials. Via PLAL is indeed possible to obtain nano-compounds, e.g. via ablation of alloys of two or more materials or by subsequent ablation of two or more materials in the same liquid (in this case you have mixing and combination of the "plume" arising from the ablated materials) or by ablation of one or more materials in presence of other nano-particles or other nano-compounds made of one or more materials. In this last case, the nano-particles and / or nano-compounds may also be introduced after ablation. From now on, nano-particles and nano-compounds will be generically referred to as "nano-particles (NPs)". U.S. 5585020 describes a process for the production of NPs by laser; ablation and a plant for laser ablation with a single ablation chamber (block), not interconnected with further chambers, according to the preamble of claim 1.

The PLAL technique offers considerable advantages over other methods for the production of NPs, in particular the fact that the final product (both the NPs and the fluid where the NPs are dispersed) does not present residual chemical precursors nor undesirable side-products and in general it does not require stabilizing agents (PLAL NPs are indeed electrically charged and repel each other electrostatically). The PLAL NPs and the fluids where they are manufactured and dispersed are pure and clean, therefore they do not need subsequent purifications (S. Besner et al., 2008, Appl Phys A 93, 955-959). Both fluids and NPs purification would instead be required if chemical synthesis procedures were adopted.

The PLAL is a universal technique, being applicable to a variety of solid substrates (e.g. metals, semiconductors, oxides, alloys, ceramic materials), immersed into both organic and inorganic fluids. NPs produced by PLAL can be functionalized, either "in situ" (i.e. into the liquid where ablation takes place) and "ex situ" (i.e. after ablation has occurred), with biological molecules and / or inorganic materials which, through suitable procedures, bind to NPs giving them specific properties dependent on the specific molecule and/or material. For instance, it is possible to obtain bio-sensors (Anker JN et al., 2008, Nature Materials 7, 442 - 453) or nano-materials with curative properties or in general therapeutic and / or diagnostic nano-materials. US2010/0291174 describes a device comprising NPs having proliferative biological activity and NPs having antiproliferative activity, where the NPs are obtained by PLAL and have dimensions comprised between 20 and 300 nm. US2011/0189695 describes the PLAL methodology to obtain functionalized NPs, such as nano-gold conjugated with an oligonucleotide specific for the sex chromosomes, able to penetrate into the mammalian spermatozoa. In this case, NPs have dimensions comprised between 1 and 150 nm.

Contact lenses are medical devices having the form of a small transparent cap, which are placed on the eye surface to correct refractive errors (e.g. myopia, hyperopia, astigmatism, etc..), for aesthetic purposes (e.g. coloured lenses), for therapeutic (e.g. lenses for bandage for the treatment of bullous keratopathy and other cornea diseases) and diagnostic (e.g. measurement of ocular pressure) purposes, or even to protect from electromagnetic radiation of various wavelengths (for example protection from UV rays or harmful radiation produced by portable instruments, see US2005/024583). Contact lenses feature many advantages. However their application on the cornea may lead, after a long time use, to abrasions and ulcers due primarily to the fact that the contact lens must be periodically removed from the eye and stored into appropriate solutions to be then reused. This repeated procedure may favour, especially in the case of negligent use of maintenance systems, lens' contamination by harmful agents, both chemical and bacterial.

It is estimated that the annual incidence of eye infections due to the use of soft contact lenses is 3.5 to 4.1 cases per 10,000 users. Similar data holds for intraocular lenses implanted via surgical procedures. To prevent or minimize the complications caused by the presence of deposits on contact lenses, it is essential that the user performs a correct maintenance of the same. Maintenance includes cleaning action, essential for removal from the surface of the lens of mucus and cosmetics and deposits of lipid and protein, followed by a disinfectant action with one or more antiseptics. It then proceeds with an action of rinsing with saline solutions generally, to eliminate the residues resulting from the action of disinfecting and / or cleaning, maintain the wettability of the surface and play the role of buffer, or maintain the level of pH to neutral values or slightly basic. At the end, is possible to proceed with an action of lubrication.

With the use of disposable lenses, it is partially overcome the need for such procedure. However, disposable lenses have not completely replaced the traditional ones, soft and rigid. Furthermore, the contact of a foreign element with the cornea might cause allergic or irritative phenomena, favouring the accumulation of particles coming from the outside. Additionally, the intraocular lens (IOL = Intraocular Lens), i.e. those lenses that are implanted into the eye in place of the crystalline, have an even more invasive effect on the eye. The implantation of such lenses, which requires the incision of the patient's cornea, while performed in a sterile environment, can in fact favour the entry of foreign substances.

Considering that UV radiation may favour the onset of cataract, pterygium, ocular tumor and degeneration of the macula, it would be appropriate to provide lenses that filter out specific wavelengths responsible for the onset of these ophthalmic pathological phenomena. In particular, the light in the wavelength between 400 nm and 500 nm (violet and blue) is detrimental to the photoreceptors of the retina and is held responsible for the age-related macular degeneration. It would therefore be appropriate to provide lenses able to filter out those specific wavelengths responsible for the onset of said ophthalmic pathological phenomena, protection achieved without affecting the scotopic vision. Given the side effects produced by current available technologies, it seems necessary to make contact lenses and IOLs more protective and compatible with the human eye, in order to prevent any alteration of the physiological balance and to avoid some unpleasant consequences that may result in their use, though providing the benefits arising from their use. It is desirable to take measures to increase comfort of use of the lenses (e.g. increasing the wettability) and ease of use (e.g. providing optical indication of the state of life of the lens and / or of the exhaustion of some of its properties). The development of new contact lenses with therapeutic and / or diagnostic properties would also be an advancement in the technical possibilities of care and instrumental examination for the verification of pathologies in progress. Finally, the introduction of valuable metals (e.g. gold) dispersed in the body of the lens could allow to embellish the ophthalmic device. EP1648534 describes ophthalmic devices including silver NPs with antibacterial properties. In particular, such silver NPs have size up to 1 micrometer, and they are obtained chemically from silver salts through a process of reduction of silver ions and subsequent agglomeration into clusters (nano-particles). These NPs may undergo aggregation phenomena, and indeed aggregates comprising 2 to 6 NPs are observed, reaching an overall size of several microns.

### Summary of the Invention

The present invention claims a plant according to claim 1 for the production of a fluid comprising NPs. Said NPs are obtained by means of the PLAL technology and they are absolutely pure, their external surface, as well as the liquid dispersion phase, being absolutely free of unwanted and/or not removable substances (e.g. residual anions or reducing agents contaminating NPs' surface or unreduced metal salts present in the colloidal fluid) coming from the manufacturing process itself, as usual in chemical synthesis procedures (S. Besner et al., 2008, Appl Phys A 93, 955-959).

Another object of the present invention is a process according to claim 11 for the production of ophthalmic devices based on fluids comprising NPs. The inventors of the present invention have found that, thanks to PLAL technology, it is possible to incorporate NPs in ophthalmic devices, in order to improve significantly the performance of these products and / or provide them with new features, such as: antimicrobial properties, prevention of the deposition of proteins or lipids on lens surfaces, UV-blocking (or violet-and-blue-radiation partial blocking, or other harmful radiation to the eye blocking) properties, increased wettability, therapeutic/diagnostic properties, aesthetic features, functional properties. A further object is a contact lens comprising NPs obtained by PLAL technology, which offers, compared to the lenses currently in use, safer prolonged use and / or better wettability and consequent better comfort and / or increased defence against external attacks under extreme conditions of use such as in rooms with smoke, air conditioning, wind, high microbial load and / or best defence against lipid/ protein deposits, and which provides: UV and/or blue-and-violet light (400 nm - 500 nm) and/or other harmful radiation protection (eventually limiting or eliminating the use of organic compounds commonly used for these purposes), therapeutic or diagnostic features (both relative to the state of health of the eye or of the whole organism) and / or a colouring with aesthetic and / or functional purposes. A further object is an IOL comprising NP obtained by the PLAL technology which offers, compared to the lenses currently in use, safer prolonged implantation and / or antimicrobial properties, in order to minimize the risk of postoperative infections, and / or better protection against lipid / protein deposits that can grow over time on the lens, and which provides UV, blue-and-violet (400 nm - 500 nm) and other harmful radiation protection (eventually limiting or eliminating the use of organic compounds commonly used for these purposes). Eye and/or lens cleaning and/or disinfecting solutions comprising NPs, as well as devices (e.g. contact lens storage cases or one or more elements of the same) for the storage of contact lenses, form further objects.

Further characteristics and advantages of the invention will become more evident from the following non-limitative and suggestive description of some examples of embodiment.

### Description of the figures

Figure 1: Scheme of the block A of the plant of the present invention.
Figure 2: Detail of the substrate rod used by the plant of the present invention.
Figure 3: Scheme of the B block of the plant of the present invention.

### Detailed description of the invention

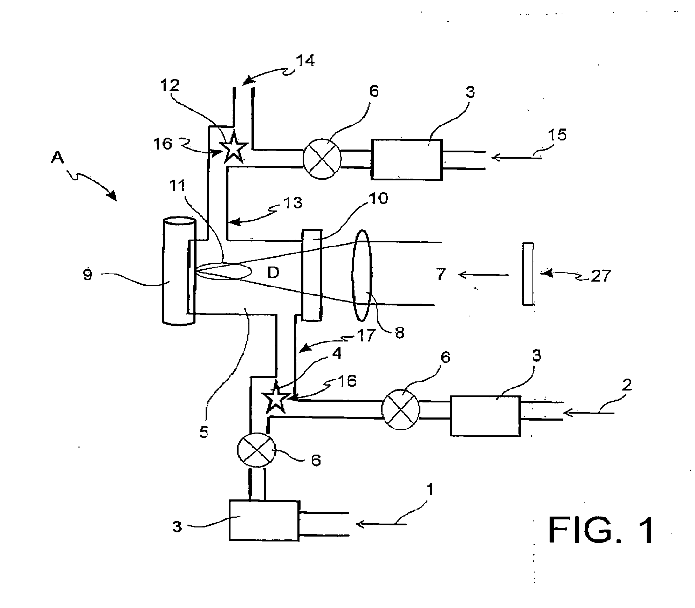

The plant for the production of a fluid comprising NPs obtained by means of the PLAL technology comprises at least a first independent block, block (A). Said plant comprises two or more blocks that can be used independently or jointly. The system includes two blocks, block (A) and block (B), to be used in an integrated manner, with a flow preferably directed from the block (A) to the block (B), and then from the latter is conveyed to the outside. In a different configuration, the block (A) and the block (B) are arranged in such a way so to allow a recirculation between (A) and (B). The advantage arising from this system with two or more blocks is given by the versatility of use. The system allows a functionalization of NPs during or after the ablation process in the block (A), :or a functionalization in the block (B) of NPs created in the block (A) and reshaped or resized in the block (B), in addition to other forms of use that are better highlighted in the description that follows. The block (A), shown schematically in Figure 1, comprises an ablation chamber (5) and, optionally, mixing chambers (4, 12) connected via connecting channels (17) and (13) to said ablation chamber (5). In said mixing chambers (4, 12) can be optionally placed propellers (16). Said block further comprises a series of openings (1, 2, 14, 15) for entry and / or exit of fluids, pumping systems (3) independent of each other, located downstream of said openings if said openings are functional to the input of fluids, placed upstream of said apertures if said openings are functional to the exit of fluids, in order to adjust the flow of said fluids, taps (6) positioned so as to isolate portions of the same block, e.g. located downstream of said openings if said openings are functional to the entrance of fluids, placed upstream of said openings if said openings are functional to the exit of fluids. A substrate (9) is placed in such a manner so to be exposed to the fluids present in said ablation chamber (5). In particular, said substrate (9) is positioned wholly or partly within said ablation chamber (5), or it is positioned outside said ablation chamber (5), in such a manner that a portion thereof is exposed, thanks to an appropriate watertight opening, to the inside of the ablation chamber (5). One or more laser pulses (7), simultaneously or sequentially, generated from one or more sources (27) and focused by a lens or a lens system (8) on the substrate (9) to be ablated, reach said ablation chamber (5). Said substrate (9) may be continuously fed so as to allow for a continuous ablation procedure, transforming the substrate material in NPs.

If, in order to increase NPs' productivity in the time unit, multiple lasers are simultaneously used, these will strike points of the substrate (9) lying on the same straight line. Said laser pulses enter said ablation chamber (5) through a window (10) placed on one of the walls of the chamber itself. Said lens or system of focusing lenses (8) is positioned at an appropriate distance from the substrate (9), distance D, from about 2 cm to about 40 cm, preferably between about 4 cm and about 25 cm depending on the focal length of the optical system used. Said substrate (9), provided that the absolute position of the meeting point between said substrate and the lasers is fixed, is movable, i.e. said substrate may expose different portions of its surface to the laser beam, while still maintaining unchanged the said distance D between said lens or system of focusing lenses (8) and said substrate (9). In a preferred embodiment, said substrate (9) has a cylindrical shape (e.g. a rod or a wire) and can perform roto-translational motion, i.e. said cylindrical shape can be rotated around its longitudinal axis and move along the same longitudinal axis. Alternatively, said substrate (9) is a flat geometric figure, preferably a plate, positioned in space and moving in a plane P. One or more fluids can enter said block (A) through said openings (1) and (2). Said one or more fluids, suitably mixed in said mixing chamber (4), enter said ablation chamber (5) with a calibrated laminar flow. Said pumping systems (3) and said mixing chamber (4) ensure a proper flow to obtain the desired mixing of the fluids and a correct input in said ablation chamber (5). By action of said laser pulse on said substrate, NPs will be generated in an area close to the surface of the substrate (11) and from this they are dispersed and stabilized in the fluid present in the ablation chamber; then they will be transported to the mixing chamber (12) through the connecting channel (13) thanks to the flow generated by the pumping systems (3). In one embodiment, said fluid comprising the neo-formed NPs will be conveyed to the outside through said opening (14). In a different embodiment, a further fluid is introduced into the plant through said opening (15), connected to said mixing chamber (12). In a preferred embodiment, said connecting channel (13) will have a length ranging from 1 mm to 10 mm, preferably 6 mm, and a diameter ranging from 0.5 mm to 10 mm, preferably 4 mm. Said ablation chamber (5) will have dimensions preferably comprised between 1x1x6 mm and 10x10x60 mm, preferably 4x4x23 mm.

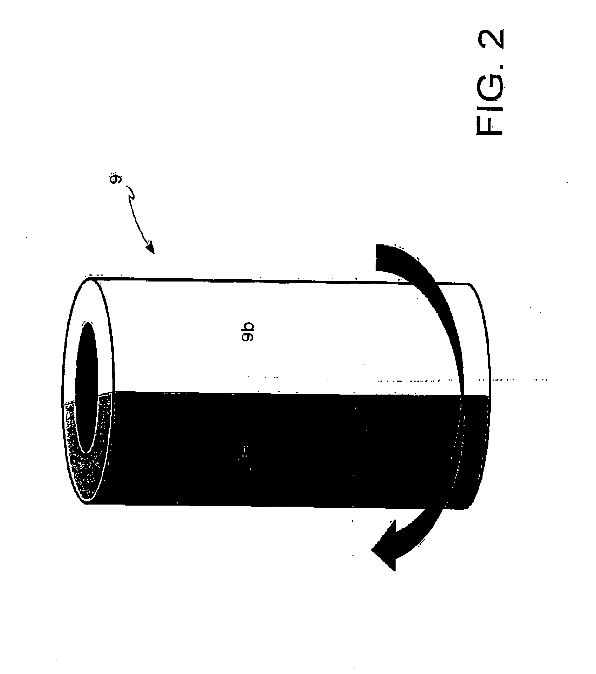

Said substrate (9), which preferably has a cylindrical shape, has a diameter ranging from 1 mm to 10 mm, preferably 4 mm, and a length ranging from 10 mm to 100 mm, preferably about 50 mm. In a further embodiment, in order to improve ablation efficiency (i.e. in order to increase, *ceteris paribus*, amount of ablated material per laser pulse or unit of time), said substrate (9) is a wire with a diameter ranging from 100 um to 1000 um. Said substrate (9) may consist of one or more materials. By rotating the substrate, the laser beam can therefore strike the different materials said substrate is made of and present on its surface, so as to obtain NPs or nano-compounds made of those different materials and hence having different properties with respect to the individual materials. If said substrate is a wire, no rotation is needed. In Figure 2 is represented a cylindrical rod of substrate (9), having two portions (9a) and (9b) along the rotation axis. Portions consist of different materials. For the purposes of the present invention, said material is selected from Ag, Ti, TiO2, Au, Zn, Cu, Pt, transition metals, ferromagnetic materials, and / or oxides of these metals and / or alloys of these metals between themselves or with other substances. It may also be possible to use fluorine compounds (e.g. fluorspar) and selenium or its compounds. In a preferred embodiment, said material is selected from Ag, Ti, TiO2 Au, Zn, Cu, Pt, compounds of these materials with each other, compounds of TiO2 with transition metals, compounds Au / Ag. Having a mobile substrate (9) features a further advantage that makes the plant of the present invention unique. Said advantage consists in the fact that the laser beam will hit the substrate (9) in a point of its surface (target) which will vary from moment to moment, while preserving the absolute position of the meeting point between target and laser, thus ensuring that the ablated material travels always the same distance within the block (A) (differently from what would occur if the target was fixed and the laser beam moved on the substrate surface) . Each laser beam will hit a different area of the substrate, without loss of efficiency of the ablation process itself, loss that occurs as a result of repeated stimuli on a same point of the substrate. Since a stream flows in the ablation chamber, the "plume" is moved by the flow itself, so that, upon arrival of a subsequent laser pulse, the "plume" previously generated may not be found on the trajectory of the new pulse, thus avoiding loss of efficiency of the ablation process and / or other side effects.

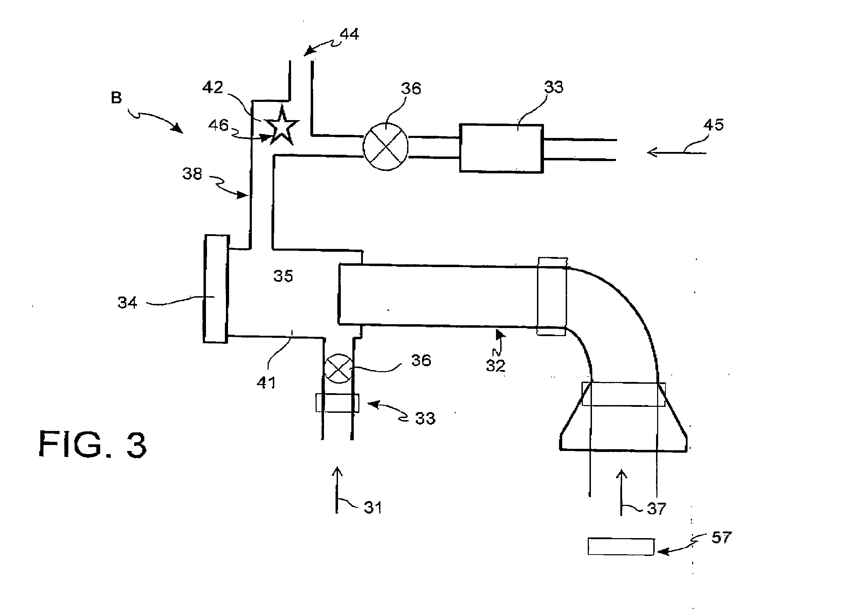

In figure 3 is shown schematically said second block (B). Said block (B) comprises a homogeneous ablation chamber (35) and, optionally, a mixing chamber (42) connected via a connecting channel (38) to said homogeneous ablation chamber (35). A propeller (46) can be optionally placed in said mixing chamber (42). Said block further comprises: a series of openings (31, 44, 45) for entry and / or exit of fluids, mutually independent pumping systems (33), regulating the flow of said fluids, placed downstream of said openings if said openings are functional to the input of fluids, placed upstream of said openings if said openings are functional to the exit of fluid, taps (36) positioned so as to isolate portions of the same block, e.g. placed downstream of said openings if said openings are functional to the entrance of fluids, placed upstream of said openings when said openings are functional to the exit of fluids. Said homogeneous ablation chamber (35) comprises a quartz tube (32), which guides and makes uniform the laser beam (37) coming from a source (57). Preferably, a mirror (34) is positioned in said homogeneous ablation chamber (35) in front of said quartz tube. The laser beam coming out from the quartz tube is thus reflected by said mirror (34) to re-radiate the fluid contained in said homogeneous ablation chamber (35). In a preferred embodiment, said connecting channel (38) will have a diameter of 0.5 mm - 10 mm preferably 4 mm and a length between 1 mm - 10 mm. Said homogeneous ablation chamber (35) will have dimensions preferably comprised between 2x1x6 mm and 10x10x60 mm, preferably 4x4x23 mm. The diameter of said quartz tube (32) is between 1 and 10 mm. Said quartz tube (32), in a preferred embodiment, will have the maximum dimensions compatible with said homogeneous ablation chamber (35). For example, if said homogeneous ablation chamber has dimensions 4x4x23 mm, said quartz tube will have a diameter of 4 mm. One or more fluids comprising NPs are entered through said opening (31) in said homogeneous ablation chamber (35) located in said block (B). In said homogeneous ablation chamber (35) said NPs are each exposed to energy of equal intensity, also thanks to the fact that the laser beam entering said homogeneous ablation chamber (35) is uniformed by the presence of the quartz tube (32). In this way, NPs are made uniform (i.e. standardized). For such reason the ablation chamber (35) is referred to as homogeneous ablation chamber. Said one or more fluids, which comprise the standardized NPs, are conveyed, via said connection channel (38), in said optional mixing chamber (42) and then, after optional mixing with a further entering fluid coming from said opening (45) and / or after functionalization as described hereinafter, preferably conveyed outside through said opening (44).

Said first block (A) and second block (B) are integrated together, with a flow that from the block (A) is preferably directed to the block (B) and from this is conveyed to the outside, or said block (A) and said block (B) are arranged in such a way as to allow a recirculation between said block (A) and said block (B). In particular, from the block (A) the fluid comprising the neo-formed NPs is conveyed through the opening (14) to the block (B), that is accessed through the opening (31). Subsequent to the processing operated in the block (B), the fluid comprising the NPs is conveyed to the outside through the opening (44). If a recirculation between block (A) and block (B) is implmented, the output fluid from the block (B) through the opening (44) is directed back into the block (A) through the opening (1). The integration of the two blocks allows the described versatility of use. The geometry of the system described herein and, in particular, the dimensions indicated for the connecting channel (38), allow NPs to reach said mixing chamber. (42) in a time comprised between 1 ms and 1 s from their exit from said homogeneous ablation chamber (35), preferably in a time of between 1 ms - 100 ms. It has been shown (Sajti CL 2011, J. Phys. Chem. C 115, 5094-5101) that the time between NPs' generation and their functionalization has a great impact on NPs' size and conjugation efficiency. With "functionalization" is meant that the NPs may be coated with a layer or conjugated to molecules able to increase NPs' ability to bond with polymer chains or NPs can be conjugated with bio-molecules, preferably for diagnostic and / or therapeutic purposes, as better explained hereinafter. Said blocks (A) and (B), in further embodiments, may present additional openings and further mixing chambers, in order to allow differentiated input and / or output of a greater number of fluids. In a further embodiment, said plant's dimensions are appropriately scaled so as to tune the flow of fluid in said ablation chamber (5) and homogeneous ablation chamber (35). The plant of the present invention allows implementing the ablation and eventual functionalization procedure in a controlled and standardized environment. This ensures compliance with proper operational time, in a technology where timing is essential in order to achieve optimal results. The plant also offers the described advantages arising from the use of a movable substrate.

### Description of the laser

The laser pulse used in the plant of the present invention will have a duration ranging from 100 femtoseconds to 100 nanoseconds, choosing to use a nanosecond or femtosecond laser as appropriate. In particular, the choice of a femtosecond laser is preferred whenever functionalization is required, particularly conjugation with biomolecules. Said nanosecond laser (preferably a Q-switched laser) will have the following characteristics:
- pulse duration between 3 and 60ns, preferably between 3 and 20 nm, even more preferably between 3 and 10 ns;
- wavelength to be determined according to the material to be ablated and to the liquid where laser ablation takes place; in general it is possible to set any wavelength not absorbed from the liquid, preferably said wavelength will be between 300 nm and 1100 nm, preferably said wavelength is 1064 nm or 532 nm or 355 nm;
- pulse energy between 1 mJ and 1 J, preferably between 10 mJ and 1 J, preferably between 100 mJ and 1 J;
- frequency between 1 Hz and 5 kHz, preferably between 1 Hz and 100 Hz, preferably between 10 and 30 Hz;
- fluence to be set depending on the liquid and the substrate used, preferably between 1 and 100 J/cm².

In a further embodiment featuring a femtosecond laser, it preferably will adopt the following parameters:
- pulse duration between 100 and 120 fs, preferably about 120 fs;
- wavelength to be determined according to the liquid where laser ablation takes place, preferably about 800 nm;
- pulse energy between 10 and 400 microJ, preferably 40-200 microJ;
- frequency between 1 kHz and 5 kHz, preferably about 2 kHz;
- fluence to be set depending on the liquid and the substrate used, preferably between 0.01 and 1 J/cm². Depending on the laser beam used, the speed of displacement of the substrate will also accordingly vary. In case of a nanosecond laser and a cylindrical substrate, the substrate will have a rotation frequency around its longitudinal axis between 0.1 Hz-10 Hz and a translational speed along the same longitudinal axis between 0, 1 mm / s and 10 mm / s.

In case of a femtosecond laser, the rotation frequency will be between 40 Hz - 200 Hz and translational speed between 1 cm / s and 10 cm / s. In this latter case, the thickness of the layer of liquid that covers the substrate will be between 2 mm and 1 cm. In the former case, said thickness will be defined case by case.

In a further embodiment, laser ablation in liquid may be performed via continuous wave (CW) lasers, preferably high-power, high-brightness CW fiber laser sources at a wavelength of 1070 nm.

### Description of the manufacturing procedure of ophthalmic devices comprising nano-particles

The process for the production of ophthalmic devices comprising NPs obtained with PLAL technology encompasses the following steps:
a) provision of a fluid;
b) contacting said fluid with a substrate composed of one or more materials selected from Ag, Ti, TiO2, Au, Zn, Cu, Pt, transition metals, ferromagnetic materials, and / or oxides of these metals and / or alloys of these metals among themselves or with other substances, fluorine compounds (eg. fluorspar), selenium and its compounds, where said substrate is movable;
c) sending a laser pulse on said substrate, characterized in that this laser pulse hits a point of the substrate surface which changes from time to time even though it still always has the same spatial coordinates and this due to the motion owned by the substrate itself and to the fact that the laser remains fixed; thus producing a fluid comprising NPs;
d) optionally, adding a further fluid to said fluid comprising NPs, where said further fluid is selected from a stabilizing agent, a fluid containing biomolecules for "ex situ" functionalization, a fluid containing other and different NPs or nano-compounds, any organic or inorganic fluid;
e) optionally, exposure of said one or more fluids comprising NPs to an homogenous laser beam, to get a fluid comprising standardized NPs;
f) optionally, mixing of the fluid comprising standardized NPs with a further fluid which preferably comprises biomolecules to functionalize NPs or nano-compounds, stabilizing agents, other organic or inorganic fluids, fluids comprising other NPs.

In a preferred embodiment, said fluid is any organic or inorganic fluid transparent to the laser radiation, preferably selected from water, alcohols, hydrocarbons or mixtures thereof or is a polymerizable fluid composition comprising at least one solvent and a monomer, a macromer and / or a prepolymer; the said solvent is selected from water, alcohols, preferably ethanol or methanol, amides of carboxylic acids, such as dimethylformamide, dipolar aprotic solvents, such as dimethyl sulfoxide or methyl ethyl ketone, ketones, for example acetone or cyclohexanone, hydrocarbons, for example toluene, ethers, for example tetrahydrofuran (THF), dimethoxyethane (DME) or dioxane and halogenated hydrocarbons, for example trichloroethane and also mixtures of suitable solvents, for example mixtures of water with an alcohol, for example water / ethanol or water / methanol.

In a further embodiment, the fluid referred to in step a) may also comprise: biomolecules (in order to implement "in situ" functionalization), one or more stabilizing agents, other NPs or other nano-compounds, e.g. in order to realize nano-compounds via coverage of said NPs / nano-compounds by the material ablated from the substrate, other organic or inorganic fluids, transparent to the laser radiation and functional to subsequent process stages, crosslinking agents. In a preferred embodiment, said fluid, comprising optionally standardized and optionally functionalized NPs, is sent to a polymerization process, a process adopting methods known to the industry.

In a further embodiment said fluid, comprising optionally standardized and optionally functionalized NPs, is itself the ophthalmic device of interest, for example it is used for disinfection and / or cleaning of the eye or of the lenses. In a further embodiment, contact lenses or IOLs already polymerized, preferably contact lenses, are immersed into the said fluid in order to incorporate the NPs present in it. The laser pulse used in the procedure will have a duration between 100 femtoseconds and 100 nanoseconds, and it can therefore be respectively generated from a femtosecond laser or a nanosecond laser. In particular, said nanosecond laser (preferably a Q-switched laser) will have the following characteristics:
- pulse duration between 3 and 60ns, preferably between 3 and 20 nm, even more preferably between 3 and 10 ns;
- wavelength to be determined according to the material to be ablated and the liquid where laser ablation takes place; in general it is possible to set any wavelength not absorbed from the liquid, preferably said wavelength will be between 300 nm and 1100 nm, preferably said wavelength is 1064 nm or 532 nm or 355 nm;
- pulse energy between 1 mJ and 1 J, preferably between 10 mJ and 1 J, preferably between 100 mJ and 1 J;
- frequency between 1 Hz and 5 kHz, preferably between 1 Hz and 100 Hz, preferably between 10 and 30 Hz;
- fluence to be set depending on the liquid and the substrate used, preferably between 1 and 100 J/cm².

In a further embodiment featuring a femtosecond laser, it will preferably adopt the following parameters:
- pulse duration between 100 and 120 fs, preferably about 120 fs;
- wavelength to be determined according to the liquid where laser ablation takes place, preferably about 800 nm;
- pulse energy between 10 and 400 microJ, preferably 40-200 microJ;
- frequency between 1 kHz and 5 kHz, preferably about 2 kHz;
- fluence to be set depending on the liquid and the substrate used, preferably between 0.01 and 1 J/cm².

In case of a nanosecond laser and a cylindrical substrate, the substrate will have a rotation frequency around its longitudinal axis between 0.1 Hz-10 Hz and a translational speed along the same longitudinal axis between 0, 1 mm / s and 10 mm / s. In case of a femtosecond laser, rotation frequency may be between 40 Hz - 200 Hz and translational speed between 1 cm / s and 10 cm / s.

In a further embodiment, the process for the production of ophthalmic devices comprising NPs will be based on laser ablation in liquid performed via continuous wave (CW) lasers, preferably high-power, high-brightness CW fiber laser sources at a wavelength of 1070 nm.

### Description of ophthalmic devices comprising nano-particles

Disclosed are ophthalmic devices comprising NPs obtained by means of the PLAL technology. Such NPs may or may not be functionalized. The term "comprising" as used above indicates that NPs are dispersed homogeneously in the material of the device (or solution), as it will be outlined below. Any unevenness will eventually be introduced ad hoc by appropriate techniques such as: spin casting (i.e. a method that uses centrifugal force to produce castings from a rubber mould), spin coating (i.e. a procedure used to apply uniform thin films on flat surfaces: an excess amount of a fluid is placed on the surface, which is then centrifuged at high speed in order to spread the fluid thanks to centrifugal force.), or by means of magnetic fields (preferably in presence of ferromagnetic or superparamagnetic nano-materials) applied on one side of the mould, or by other suitable techniques.

In one embodiment, said ophthalmic devices are contact lenses or IOLs.

Such contact lenses may be: rigid gas-permeable lenses with any thickness, with any DK, where with the term DK (permeability coefficient) is indicated the degree of permeability of the lens material to oxygen, hydrophilic soft lenses, hydrophobic soft lenses, which also include extended wear lenses. Furthermore, the contact lenses can belong to any of the four categories of lenses (group 1, nonionic and low water content lenses; group 2, nonionic and high water content; group 3, ionic and low water content; group 4, ionic and high water content) as defined by the Food and Drug Administration (FDA) on the basis of their water content and electrostatic charge. The composition of said lens will vary depending on the type of lens. For sake of clarity, but not limited to them, the components generally used in various types of lenses are listed below.

Traditional rigid lenses; they are generally made of polymethylmethacrylate (PMMA) or poly (2-hydroxy ethyl methacrylate) (pHEMA). Rigid gas-permeable lenses; these are rigid lenses, but containing some monomers that have the property of being permeable to oxygen in order to have a greater oxygenation of the eye; such lenses are also generally made of pHEMA. Soft lenses: they are made of polymers having the physical characteristic of softness and they are split in two main categories: not-hydrophilic lenses, or silicone lenses, and hydrophilic. The non-hydrophilic soft lenses have a high value of oxygen permeability, but they are essentially hydrophobic and therefore poorly tolerated by the wearer. To reduce this deleterious characteristic, pHEMA is often added (other usable monomers are vinyl carbonates and vinyl carbamates). Hydrophilic soft lenses are made from hydrophilic polymers with high hydrophilicity. The capacity of this type of lenses to transmit oxygen depends fundamentally on the level of hydration. More recent soft lenses (disposable or frequent-change lenses), made of gel with medium-high hydration, counteract possible limitations (in terms of water content and oxygen permeability) also thanks to thickness modulation. Disposable lenses also allow reducing the risk of accumulation of deposits (lipids and/or proteins) on the lens surface. Daily lenses are changed every day and do not require any liquid for their maintenance. Fortnightly, monthly and similar lenses need maintenance, preservatives and detergents. IOLs may be rigid or flexible. Suitable materials for the manufacture of IOLs are, by way of example and without any limitations, polymethylmethacrylate or polymers obtained from the following monomers: 2-ethylhexyl acrylate, 2-ethylhexyl methacrylate, 2,2-dimethyl propyl acrylate, 2,2-dimethyl propyl methacrylate, trimethyl cyclohexyl acrylate, trimethyl cyclohexyl methacrylate, isobutyl acrylate, isobutyl methacrylate , isopentyl acrylate, isopentyl methacrylate or mixtures thereof, optionally crosslinked with ethylene glycol di-methacrylate, tetraethylene glycol di-methacrylate, allyl acrylate, allyl methacrylate, trifunctional or tetrafunctional acrylates, trifunctional or tetra functional methacrylates or mixtures thereof, pHEMA.

The production process for all these lenses is based on polymerization (by thermal action and/or UV rays) of the mixture of monomers forming the lens. Polymerization enables the monomers to bind to each other and constitute the polymer of the lens.

The fluid comprising the NPs obtained by laser ablation has to be added or replace the mixture of monomers normally used in the lens production process, or may itself represent the mixture to be polymerized. Said fluid comprising the NPs may be water, or a polymerizable fluid composition, prepared by dissolving at least one monomer, a macromer or prepolymer and any other desired component in a suitable solvent and known to the skilled person. Examples of suitable solvents are water, alcohols, for example ethanol or methanol, amides of carboxylic acids, such as dimethylformamide, dipolar aprotic solvents, such as dimethyl sulfoxide or methyl ethyl ketone, ketones, for example acetone or cyclohexanone, hydrocarbons, for example toluene, ethers, for example tetrahydrofuran (THF), dimethoxyethane (DME) or dioxane and halogenated hydrocarbons, for example trichloroethane and also mixtures of suitable solvents, for example mixtures of water with an alcohol, for example water / ethanol or water / methanol. Said fluid will be chosen depending on the characteristics desired in the finished product, in accordance with the prior art. In one embodiment, said fluid may comprise a suitable stabilizing agent for the NPs. By stabilizing agent is meant a material that is able to prevent or at least minimize the aggregation of NPs present in the fluid. In one embodiment, the stabilizing agent will be one or more of the monomers or prepolymers or macromers or crosslinking agents or other liquids or solvents present in the fluid itself. Said stabilizing agent is selected from those known to the skilled person, preferably from the group which comprises: an alcohol, such as ethanol, polyacrylic acid (PAA), polyethylene imine (PEI), polyvinylpyrrolidone of molecular weight less than 1550 kDa, a copolymer of molecular weight lower than 1,500 kDa of vinylpyrrolidone with one or more vinyl monomers, a polyphenolic material having amino and / or sulfhydryl groups or mixtures thereof.

The polymerization process will then lead to a semi-finished product including the NPs, and this whatever the method later used to get to the lens. Typical production methods are; blank cutting (on a lathe), moulding and semi-moulding. A lens can be manufactured by cutting a blank. A blank is a cylinder with a diameter of about 12.7 mm, from which, through a turning and polishing process of the inner and outer part, the lens derives. Production by moulding consists of inserting the mixture of monomers constituting the lens in predetermined shapes, performing polymerization, finally extracting a finished lens. Semi-moulding is a process requiring polymerization of the inner part of the lens on a form or mould, obtaining a support that will enable, through a subsequent turning and polishing process, to get a lens featuring the expected optical power. Said fluid comprising the NPs is inserted into a tube to get the blank or directly into moulds to obtain the moulded and/or semi-moulded lens, as described above. The polymerization medium, tube or mould, is inserted in a oven for thermal polymerization, for appropriate time and temperature ramps, and / or exposed to UV light with exposure times that may vary from 15 to 60 minutes until just cured, depending on the power of the lamp and the distance. This gives the finished lens in the case of moulding, the inner part of the finished lens in case of semi-moulding, or a cylinder made of the lens material (blank) from which, through cutting, the lens is obtained. The technologies used for manufacturing contact lenses and IOLs, as well as the materials used, are known and conventional and they do not constitute the subject matter of the present patent, so they will not be described in greater detail.

The procedure requires that the fluid containing the NPs produced by laser ablation is mixed or replace completely the mixture normally used for the production of lenses (both moulded and semi-moulded lenses) or blanks and / or lens case (or part thereof) or, alternatively, the fluid containing the NPs may be itself the material intended for the production of lenses (both moulded and semi-moulded lenses) or blanks and / or the lens case (or part thereof). The fluid may be incorporated in the mixture by rotation, mixing by shaking, homogenization, or by any other appropriate system. In a preferred embodiment, said NPs are incorporated and trapped in the polymer network as a result of the polymerization process. According to this embodiment, if hydrogen peroxide catalysts are used, as well-known to those skilled in the art, metallic NPs subject to oxidative processes (e.g. Ag NPs) may be covered by an oxide layer, thus resulting in the generation of a composite structure with a metallic core and an external oxide shell.

In a further embodiment, after curing and/or following hydration processes subsequent to polymerization (both manufacturing industrial processes and physiological fluid transport phenomena during the wearing of the lens), said NPs may instead persist and/or be transported in the liquid phase, for example in the liquid phase of a hydrogel. In the latter case, in order to prevent the gradual release of all or part of the NPs and reduce any diffusion phenomena of NPs toward the outside of the body of the lens, said NPs, in the process of functionalization, may optionally be covered with a layer or conjugated to molecules able to increase their ability to bond with the polymer chains of the lens. In a further embodiment, the lens may be immersed in the fluid containing the NPs subsequently to polymerization. In this case the lens will adsorb and / or absorb the NPs present in the fluid, which will persist in the inner aqueous phase of the lens for a variable time (dependent on the specific chemical-physical characteristics of the lens and of the NPs), before eventually spreading outwards. Such fluid containing the NPs may also be the buffered saline usually present inside the blister that houses the lens for sale to the public. This embodiment will be preferred whenever a gradual release of NPs from the body of the lens is desired. The laser ablation procedure will be preferably implemented by using PLAL technology and the plant that has been previously described.

According to one embodiment, NPs will be produced by virtue of laser ablation in liquid via CW lasers, preferably high-power, high-brightness CW fiber laser sources at a wavelength of 1070 nm.

### Applications

The ophthalmic devices comprise NPs obtained by laser ablation in liquid. Such NPs are characterized by the fact that they have a radius between 1 nm and 100 nm, preferably between 10 nm and 50 nm, preferably between 20 nm and 40 nm, and they are present in a concentration ranging between 10⁶ NP / mL and 10¹⁴ NP / mL, preferably between 10⁶ NP / mL and 10¹² NP / mL. Said NPs feature absolute purity. With absolute purity it is meant here that NPs are exempt from any type of impurity, provided that they are generated from a pure substrate, since the laser beam, by acting on a pure substrate, leads to the formation of pure NPs as well. Furthermore, NPs external surface and the liquid where they are dispersed are free of any contaminant and of unwanted and/or not removable residual anions and reducing agents (typical instead of chemical synthesis procedures). Using other methods different from laser ablation, such as chemical reduction methods (even in the case of green wet chemistry), it is indeed not possible to obtain absolutely pure NPs nor to preserve cleanness of the liquid environment of the nanocolloids, due to reasons inherent to those other methods (S. Besner et al., 2008, Appl Phys A 93, 955-959).

In one embodiment, the ophthalmic devices containing these NPs will be able to exert a bactericidal or bacteriostatic, antiviral, anti-fungal and anti-microbial in general (from now on we will only use this term to designate all these biological effects) action, via controlled release of ions (e.g. Ag + ions) and / or other reactive species (e.g. hydroxide radical, hydrogen peroxide, superoxide). It is thus be possible to manufacture contact lenses (rigid, semi-rigid and soft) exerting a constant and controlled antimicrobial action also while they are worn. Preferentially, the nano-materials used to make said anti-microbial lenses will be: Ag and / or TiO2 NPs, or nano-compounds such Ag/TiO2, Au/TiO2, Cu/TiO2, Au / Ag. In a preferred embodiment, nano-compounds of TiO2 with transition metals will be used in order to obtain a catalyst activation driven also by visible light and / or in conditions of UV light deficiency, with a general improvement of TiO2 photocatalysis efficiency, Au / Ag nano-composites have been demonstrated to own an increased anti-microbial activity compared to Ag NPs alone. Alternatively, CuO, ZnO, or Pd NPs, in combination or not with the elements previously mentioned or with other elements, may be used. Similarly, IOLs able to explicate the above anti-microbial action may be manufactured. Depending on the lens characteristics (in particular oxygen permeability, water content, thickness, ionic permeability, porosity), the lifetime of the lens (e.g. daily, biweekly, etc.), the type of the lens (e.g. lens for use only at night or lens for use in environments with a higher risk of infection, e.g. swimming pools) and the required anti-microbial power, NPs concentrations, dimensions and materials may vary. In general, regardless of the material used, NPs with a radius between 1 nm and 100 nm, preferably with a radius between 10 nm and 50 nm, and in a further preferential embodiment between 20 nm and 40 nm, will be used. NPs radius is understood measured with one of the following techniques: DLS (Dynamic Light Scattering, providing the so called hydrodynamic radius), UV-Vis (spectroscopic radius) or TEM (Transmission Electron Microscopy, Feret's radius). We will preferably refer to the Feret's radius. As far as concentration values is concerned (from now on expressed as NPs per mL of fluid), these may oscillate between 10⁶ NP / mL and 10⁹ NP / mL. Lenses with low ionic permeability and / or reduced water content, or in all cases where it is necessary to realize a competition of beneficial effects of one or more materials, such values can possibly be raised up to 10¹² NP / mL. If the lens is primarily understood as an anti-microbial agent (e.g. therapeutic contact lens with antibiotic function) on the cornea and/or related tissues and in general the eye, the above concentration values, even in conditions of good ionic permeability and hydrophilicity, may be elevated up to 10¹³ NP / mL. Such a lens, preferably a contact lens, find application as a means of treatment for, but not limited to, conjunctivitis (bacterial and viral), keratitis (bacterial, fungal or Acanthamoeba), the hordeolum, the dacryocystitis, the blepharitis , or as a lens for bandage, both for the management of post-surgical patients and in cases of lacerations, holes of the cornea and bullous keratopathy, or also to prevent corneal edema, secondary infection and vascularization of the cornea. If said lens has to be worn in conditions where it is not relevant a perfect visual acuity and clarity (e.g. during sleep or in extremely important and urgent pathological cases) or in all cases deemed clinically appropriate, the said concentration values could be raised up to 10¹⁴ NP / mL. Purely by way of example, said systems for disinfecting and / or cleaning may include: solutions with Ag NPs and / or TiO2 NPs (provided that said solutions are used in lens cases transparent to visible and / or UV light, or said lens cases are equipped with appropriate light sources capable of activating the photocatalyst); solutions with Pt NPs, e.g, to be mixed at time of use to other hydrogen peroxide solutions in order to catalyze the hydrogen peroxide splitting process to release water and oxygen. In an alternative embodiment, said NPs may be incorporated in the lens case or in a part of it, for example in an insert present in said lens case. NPs concentration in solutions and lens cases (or portions thereof) may vary between 10⁶ NP / mL and 10¹¹ NP / mL, preferably between 10⁶ NP / mL and 10⁹ NP / mL. Besides the anti-microbial action, said NPs, preferably consisting of TiO2 and its compounds with transition metals, or consisting of Ag and its compounds or even Pd or fluorine compounds, may help to prevent protein and lipid deposition on the surface of the contact lens or IOL, thanks to the onset, in close proximity to said surface (within 1 nm from it), of phenomena of lipid peroxidation, proteolysis and protein cleavage, with the possible photocatalytic degradation of the secondary products of the oxidation process. Furthermore, said NPs, preferably TiO2 NPs, in appropriate lighting conditions, thanks to the well-known phenomenon of superhydrophilicity, may increase contact lens wettability, with wearing comfort improvements especially for hard lenses' users. Besides these properties, it would be possible to manufacture contact lenses and IOLs capable of filtering selected wavelengths of the electromagnetic radiation that comes into contact with the eye. The absorption of specific wavelengths depends on the characteristics of the lens (in particular thickness and refractive index) and on NPs characteristics (size, concentration, type of material of the NPs dispersed therein). Preferably nano-materials having the ability to block UV rays (200 nm - 400 nm) and/or partially (not to excessively penalize the scotopic vision) shielding the violet light (400 nm - 440 nm) and / or blue light (440 nm - 500 nm) will be introduced in the lens. In order to accomplish this purpose, the contact lens or IOL will comprise NPs in a concentration ranging from 10⁶ NP / mL to 10¹³ NP / mL. In case it should be necessary, even for industrial and / or research applications, it will be possible to those skilled in the art to engineer lenses containing NPs capable of shielding specific wavelengths outside the above ranges.

### EXAMPLE

Table 1 presents information relating to a contact lens comprising NPs and with the following features: shielding power between 200 nm and 500 nm, thickness; of 100 microns and refractive index 1.4. Letter "T" indicates the lens transmittance in relation to specific wavelength ranges, since different types of lenses with different shielding power can be selectively and specifically manufactured. The column "Material" indicates the material of choice (including its oxides and / or compounds and / or alloys with other materials) for the implementation of the described action; NPs size may thus refer both to the size of NPs and to the size of eventual nano-compounds of the specified material. In the column "Material", where more than one material is indicated, means the concurrent presence of NPs of materials A and B.

**Table 1 - contact lens**

| **Action** | **Material** | **Size (radius, nm)** | **Concentration (NP/mL)** |
|---|---|---|---|
| UV blocking (200 nm - 400 nm), T ∼ 1% | TiO₂ | 20 - 40, preferably 30 | 10¹³ - 10¹² |
| UV blocking(380 nm - 400 nm), T ∼ 1% | Ag | 20 - 40, preferably 30 | 10¹³ - 10¹² |
| UV blocking(200 - 400 nm), T ∼ 1% | TiO₂ + Ag | 20 - 40, preferably 30 | 10¹³ - 10¹² |
| Violet-light blocking (400-440 nm), 90% ≥ T ≥ 10% | Ag | 20 - 60, preferably 20 - 40 | 10¹² - 10¹⁰, preferably 10¹¹ 10¹⁰ |
| UV and violet light blocking, (200 - 440 nm), T ∼ 1% | TiO₂ + Ag | 20 - 40, preferably 30 | 10¹³ - 10¹² |
| Blue and violet-light blocking (400 - 500 nm), 90 % ≥ T ≥ 10% | Ag: | 20 - 60 | 10¹² - 10¹⁰ |
| UV, violet and blue-light blocking (200 - 500 nm), T ∼ 1% | Ag | 20 - 40, preferably 30 | 10¹⁴ - 10¹², preferably 10¹³ - 10¹² |
| UV, violet and blue-light blocking (200-500 nm), T ∼ 1% | TiO₂ + Ag | 20 - 40, preferably 30 | 10¹³ - 10¹² |

Manufacturing and/or optimization of a specific lens with specific requirements could be easily done by an expert in the art, especially as far as the violet and blue-light blocking is concerned, for example in order not to interfere excessively with the scotopic vision. The expert in the field could easily extrapolate, both from this table and the information given in the description, directions on how to operate in various specific cases, with reference to both contact lenses and IOLs. In particular, IOLs can be manufactured with various shielding powers. Table 2 shows NPs concentrations and size for the specific case of an IOL with average thickness of 1 mm and refractive index 1.4.

**Table 2 - IOL**

| **Action** | **Material** | **Size (radius, nm)** | **Concentration (NP/mL)** |
|---|---|---|---|
| UV blocking (200 nm - 400 nm), T ∼ 1% | TiO₂ | 20 - 40, preferably 30 | 10¹² - 10¹¹ |
| UV blocking(380 nm - 400 nm), T ∼ 1% | Ag | 20 - 40, preferably 30 | 10¹² - 10¹¹ |
| UV blocking(200 - 400 nm), T ∼ 1% | TiO₂ + Ag | 20 - 40, preferably 30 | 10¹² - 10¹¹ |
| Violet-light blocking (400-440 nm), 90% ≥ T ≥ 10% | Ag | 20 - 60, preferably 20 - 40 | 10¹¹ - 10⁹, preferably 10¹⁰ - 109 |
| UV and violet light blocking, (200 - 440 nm), T ∼ 1% | TiO₂ + Ag | 20 - 40, preferably 30 | 10¹² - 10¹¹ |
| Blue and violet-light blocking (400 - 500 nm), 90 %≥ T ≥ 10% | Ag | 20 - 60 | 10¹¹ - 109 |
| UV, violet and blue-light blocking (200 - 500 nm), T ∼ 1% | Ag | 20 - 40, preferably 30 | 10¹³ 10¹¹, preferably 10¹² - 10¹¹ |
| UV, violet and blue-light blocking (200 - 500 nm), T ∼ 1% | TiO₂ + Ag | 20 - 40, preferably 30 | 10¹² - 10¹¹ |

In a further embodiment, ophthalmic devices, preferably contact lenses, preferably soft contact lenses, containing nano-materials that exhibit localized surface plasmon resonances at visible (or near-visible) wavelengths (such nano-materials will be from now on referred to as "plasmonic nano-materials"), so as to produce a coloration of the lens, may be realized. According to this embodiment, the use of hydrogen peroxide catalysts in the polymerization process must be avoided or reduced or carefully tuned in order not to trigger the formation of an oxide layer on the external surface of NPs subject to oxidative processes (e.g. Ag NPs) present in the fluid to be polymerized, Such composite structures having an external oxide shell and e.g. a metallic core are characterized by optical properties different from those of the original (i.e. not oxidized) plasmonic NPs, resulting in fading or disappearance of the plasmon resonances. This finally determines absence of any perceivable coloration of the lens.

In particular, this coloration may serve several purposes such as:
a) act as a tint of the lens;
b) act as a colorant for aesthetic (e.g. coloured contact lens) or warning (e.g., in the context of safety at work, inform other persons that the lens has been worn) purposes;
c) act as an indicator of the overall life or of life of one or more properties of the contact lens (e.g. color fading may indicate that the contact lens needs to be replaced or that the antimicrobial effect is over);
d) make precious the contact lens (due to the presence of noble metals such as gold, silver or platinum).

Preferential plasmonic nano-materials will be Ag, Au, Pd and Pt or their nano-compounds with each other or with other materials. The manufacturer must take care not to exceed plasmonic nano-material concentration values that would result in superabundant absorption of the visible radiation. E.g. in the case of gold of size 1-100 nm it would be better not to exceed concentration values ∼10¹³-10⁹ NP / mL.

In order to implement the indicator functionality referred to in point c), these values could be further remodulated according to the time duration for which staining must persist. Alternativaly, staining could be directly correlated with the properties to be monitored, fading proportionally with them. In a preferential embodiment, Ag NPs are utilised, which may provide the contact lens with a yellow color until oxidative processes, generated by the tear film or by other fluids containing oxygen in contact with the lens or by atmsoferic oxygen, do not oxidize the external surface or even dissolve the Ag NPs, resulting in the disappearance of the plasmon resonance. In this case, the absence of yellow color may indicate the end of the antimicrobial activity, which possibly may coincide with the end of lens lifetime. Where materials are used not subject to oxidative processes, such as e.g. gold (which gives reddish color), the disappearance of the plasmon resonance may for example result from a diffusion of NPs toward the outside of the body of the lens. In this latter case it is necessary that the gold or other material not remain trapped in the polymer network of the lens, e.g. favoring its persistence in the aqueous phase of a hydrogel lens even after the polymerization or, if the lens is hydrated after the polymerization, favoring NPs transport from the polymer to the aqueous phase. According to one embodiment, the lens may be immerged in a fluid containing NPs subsequently to polymerization. In this case NPs are absorbed/adsorbed by the lens and then gradually released.

According to one embodiment, hydrogen peroxide catalysts, usually adopted in polymerization processes, may be used in order to deliberately oxidize the external surface of plasmonic NPs (e.g. Ag NPs), thus preventing the lens from getting eventually undesired colours related to surface plasmon resonances.

Preferential NP size will be from 1 nm to 20 nm. According to a further embodiment, NP size will be from 20 nm to 100 nm. Said indicator functionality referred to in point c) will preferably be implemented in extended-wear (or long term disposable, at least weekly lenses) soft contact lenses. If appropriately functionalized, plasmonic NPs can act as biosensors, producing a colored reaction or a spectral change when a given chemical and / or biological event occurs. Such an event may for example trigger aggregation phenomena of NPs, thus shifting plasmonic resonances. In this case, as well as in other cases where different mechanism from aggregation occurs, the NPs incorporated into the contact lens would color it or alter its color or produce changes in the absorption spectrum, making the contact lens a diagnostic tool to visually (at glance) or instrumentally (through spectroscopic analysis, e.g. by measuring extinction) detect a specific pathological and / or bio-chemical event. The protein components present in the tears vary due to both localized ophthalmic pathologies and systemic diseases such as diabetes and cancer. Changes in these protein components can then be detected by contact lenses including plasmonic NPs acting as biosensors. Again, levels of cortisol or dehydroepiandrosterone (DHEA) in the tears may vary depending on the state of stress of an individual. Not limited to this case, use of the tear fluid as a potential biomarker may therefore be beneficial to carry out actions of screening or to monitor the presence or the evolution of a pathological condition or the effectiveness of any treatment undertaken. Functionalizing plasmonic NPs with appropriate biomolecules and exploiting the fluid permeability of soft contact lenses, it is therefore possible to diagnose disease states by monitoring specific biomarkers present in the tear fluid.

According to one embodiment, if NP aggregation doesn't occur (e.g. due to the absence of a specific biomarker or of a specifice molecule), NPs may exit from the body of the lens because of their individual small size compared to the transport channels into the polymeric network of the lens, thus resulting in fading of the lens coloration due to gradual release of inner plasmonic NPs. Diagnostic applications (biosensors) are preferly realized with Au or Ag NPs, but also with other plasmonic materials such e.g. Pd and Pt. Au and Ag NPs will be preferably functionalized with molecules or organic substances (e.g. nucleotides, peptides, antibodies, lipids) equipped with e.g. a thiol group, an amino group or a carboxyl group. The advantages of manufacturing ophthalmic devices including NPs obtained by laser ablation with the process claimed herein are manifold.

The process of laser ablation allows to obtain absolutely pure NPs. The laser beam, by acting on the substrate, leads to the formation of NPs that will be free from any kind of impurity, provided you use a pure substrate. Using NP production methods different from laser ablation, such as chemical synthesis methods, is not possible to obtain absolutely pure NPs nor uncontaminated nanocolloids free of unwanted chemical substances, due to reasons inherent to the methods themselves (S. Besner et al., 2008, Appl Phys A 93, 955-959). Such absolute purity guarantees, as well as the absence of contaminants, even a high conjugation efficiency, because the molecular bond will be much more effective if the NP is pure.

## Claims

1. Plant for the production of a fluid comprising nano-particles, consisting of two or more blocks, where the first block (A) comprises:
a) a laser ablation chamber (5), irradiated by one or more laser pulses (7), where one or more fluids are introduced;
b) a series of openings (1, 2, 14, 15) for the entry and / or the exit of the fluids;
c) optionally, mixing chambers (4, 12) connected via connecting channels (17) and (13) to said laser ablation chamber (5);
d) pumping systems (3) independent of each other, placed downstream of said openings when said openings are functional to the entrance of fluids, placed upstream of said openings when said openings are functional to the exit of fluids;
e) optionally, taps (6) to isolate portions of said plant;
f) a movable substrate (9), exposed to the fluids present in said laser ablation chamber (5);
g) a lens or a lens system (8) in order to focus one or more lasers (7) on said substrate (9) to be ablated;
and where at least a second block (B) comprises
a) a homogeneous laser ablation chamber (35), provided with a quartz tube (32) which guides and uniform a laser beam (37), where one or more fluids comprising nano-particles are introduced;
b) a series of openings (31, 44, 45) for the entry and/or the exit of the fluids;
c) pumping systems (33) independent of each other, placed downstream of said openings when said openings are functional to the entrance of fluids, placed upstream of said openings when said openings are functional to the exit of fluids;
where said first block (A) and said second block (B) are integrated together, with a flow that from block (A) is preferably directed to block (B) and from this is conveyed to the outside, or said block (A) and said block (B) are arranged in such a way to allow a recirculation between them.

2. The plant according to claim 1, wherein said movable substrate (9) is preferably a cylindrical rod able to rotate around its own longitudinal axis and move along the same longitudinal axis and has a diameter between 1-10 mm, preferably 4 mm, and a length between 10-100 mm, preferably about 50 mm and has different materials along its longitudinal axis.

3. The plant according to one of claims from 1 to 2, wherein said substrate (9) is constituted by one or more materials selected from Ag, Ti, TiO2, Au, Zn, Cu, Pt, Pd, transition metals, ferromagnetic materials and/or oxides of these metals and/or compounds of these metals among themselves or with other substances, fluorine compounds, e.g. fluorite, ), selenium or its compounds.

4. The plant according to one of claims from 1 to 3, wherein said substrate (9) is positioned wholly or partly within said laser ablation chamber (5), or is positioned outside of said laser ablation chamber (5), in such a manner that a portion thereof is exposed to the inside of the laser ablation chamber (5) thanks to a suitable watertight opening.

5. Plant according to one of claims from 1 to 4 with a second block (B) also **characterized by**:
a) a mixing chamber (42) connected via a connecting channel (38) to said homogeneous laser ablation chamber (35);
b) optionally, taps (36) to isolate portions of the same plant;
c) optionally, a mirror (34) placed in said homogeneous laser ablation chamber (35) in front of said quartz tube (32).

6. The plant according to one of claims from 1 to 5, where said channel (13) has a length between 1-10 mm, preferably about 6 mm, and a diameter between 0.5-10 mm, preferably of about 4 mm, and/or said channel (38) has a length between 1-10 mm a diameter between 0.5-10 mm, preferably 4 mm, and where said lens system or the focusing lens (8) is positioned at a distance from the substrate (9) between about 2-40 cm, preferably between about 4-25 cm and said laser ablation chamber (5) and/or homogeneous laser ablation chamber (35) have dimensions between 1x1x6 mm and 10x10x60 mm, preferably 4x4x23 mm, and said quartz tube (32) has a diameter between 1-10 mm and preferably has the maximum compatible size with said homogeneous laser ablation chamber (35).

7. The plant according to one of claims from 1 to 6, where the dimensions described for said plant are appropriately scaled so as to increase the flow of fluid in said laser ablation chamber (5) and/or homogeneous laser ablation chamber (35).

8. The plant according to one of claims from 1 to 7, wherein said laser is a nanosecond laser with the following characteristics:
a) pulse duration of between 3-60 ns, preferably between 3-20 ns, even more preferably between 3-10 ns;
b) the wavelength is to be determined according to the material to be ablated and the liquid in which ablation takes place, but any of the wavelengths transmitted by the liquid can still be used and preferably said wavelength will be between 300-1100 nm, preferably said wavelength is 1064 nm or 532 nm or 355 nm;
c) pulse energy between 1 mJ and 1 J, preferably between 10 mJ and 1 J, preferably between 100 mJ and 1 J;
d) repetition rate between 1 Hz and 5 kHz, preferably between 1-100 Hz, preferably between 10-30 Hz;
e) fluence to be determined depending on the liquid and the substrate used, preferably between 1-100 J/cm² and said substrate (9) has a cylindrical shape and has a frequency of rotation around its own longitudinal axis between 0.1-10 Hz and a speed of translation along the same longitudinal axis between 0.1-10 mm/s.

9. The plant according to one of claims from 1 to 7, wherein said laser is a femtosecond laser with the following characteristics:
a) pulse duration of between 100-120 fs, preferably about 120 fs;
b) wavelength dependent on the liquid where ablation occurs, preferably about 800 nm;
c) pulse energy of between 10-400 µJ, preferably 40-200 µJ;
d) repetition rate between 1-5 kHz, preferably about 2 kHz;
e) fluence to be determined depending on the liquid and the substrate used, preferably between 0.01-1 J/cm² and said substrate (9) has a cylindrical shape and has a frequency of rotation around its own longitudinal axis between 40-200 Hz and a speed of translation along the same longitudinal axis of between 1-10 cm/s and said substrate (9) is covered with a thickness of liquid between 2 mm and 1 cm.

10. The plant according to one of claims from 1 to 9, wherein said fluid is any fluid, organic or inorganic, transparent to the laser radiation, preferably selected from water, alcohols, hydrocarbons or mixtures thereof, or is a polymerizable fluid composition comprising at least one solvent and a monomer, a macromer and/or a prepolymer and said solvent is selected from water, alcohols, preferably ethanol or methanol, amides of carboxylic acids, such as dimethylformamide, dipolar aprotic solvents, such as dimethyl sulfoxide or methyl ethyl ketone, ketones, for example acetone or cyclohexanone, hydrocarbons, for example toluene, ethers, for example tetrahydrofuran, THF, dimethoxyethane, DME or dioxane and halogenated hydrocarbons, for example trichloroethane and also mixtures of suitable solvents, for example mixtures of water with an alcohol, for example water/ethanol or water/methanol, or said fluid comprises one or more stabilizing agents, bio-molecules for functionalization, crosslinking agents, various other nano-particles or nano-compounds.

11. Procedure for the production of ophthalmic devices comprising nano-particles which encompasses the following steps:
a) provision of a plant according to one of claims from 1 to 10;
b) provision of a fluid, wherein said fluid is any organic or inorganic fluid transparent to the laser radiation, preferably selected from water, alcohols, hydrocarbons or mixtures thereof, or is a fluid composition comprising at least one polymerizable monomer and a solvent , a macromer and/or a prepolymer and said solvent is selected from water, alcohols, preferably ethanol or methanol, amides of carboxylic acids, such as dimethylformamide, dipolar aprotic solvents, such as dimethyl sulfoxide or methyl ethyl ketone, ketones, for example acetone or cyclohexanone, hydrocarbons, for example toluene, ethers, for example tetrahydrofuran, THF, dimethoxyethane, DME or dioxane and halogenated hydrocarbons, for example trichloroethane and also mixtures of suitable solvents, for example mixtures of water with an alcohol, for example water/ethanol or water/methanol, or said fluid comprises one or more stabilizing agents, biomolecules for functionalization, crosslinking agents, various other nano-particles or nano-compounds;
c) placing said fluid in contact with a substrate (9) consisting of one or more materials selected from Ag, Ti, TiO2, Au, Zn, Cu, Pt, transition metals, ferromagnetic materials and/or
oxides of these metals and/or alloys of these metals among themselves or with other substances, fluorine compounds, e.g. fluorite, selenium or its compounds, where said substrate is movable;
d) sending a laser pulse on said substrate, said laser pulse will hit a point on the surface of the substrate that will wary instant by instant by keeping the absolute position of the point of encounter between the substrate and the laser spot fixed, where said laser is fixed and said substrate is movable, to give a fluid comprising nano-particles, wherein said nano-particles will be composed of said one or more materials which form said substrate (9);
e) entrance of said fluid comprising the nano-particles in said mixing chamber (12) where, optionally, the fluid can be mixed with a further fluid coming from said opening (15) or where a functionalization of said nano-particles may occur, mediated by a fluid coming from said opening (15), where said further fluid coming in is selected from a stabilizing agent, fluid containing biomolecules for functionalization, a fluid comprising other and different nano-particles or nano-compounds, any organic or inorganic fluid;
f) optionally, entrance of said fluid comprising the nano-particles in said homogeneous laser ablation chamber (35) present in said block (B), where a homogeneous laser pulse is directed, consequently obtaining a fluid which comprises standardized nano-particles;
g) entrance of said fluid comprising the standardized nano-particles in said mixing chamber (42) where, optionally, a mixing with a further fluid coming from said opening (45) or a functionalization of said standardized nano-particles mediated by a fluid coming from said opening (45), may occur, where said further fluid is selected from a stabilizing agent, a fluid containing biomolecules for functionalization, a fluid comprising other and different nano-particles or nano-compounds, any organic or inorganic fluid, with the achievement of a fluid which comprises nano-particles optionally standardized, optionally functionalized;
h) optionally, said fluid, which comprises optionally standardized, optionally functionalized nano-particles, may undergo a polymerization process.

## Patentansprüche

1. Anlage zur Herstellung von nanopartikelhaltigen Fluiden, bestehend aus zwei Teilen, wobei der erste Teil (A) aus
a) einer von zwei oder mehr Laserpulsen bestrahlte Laserablationskammer (5) in die eine oder mehr Flüssigkeiten eingebracht werden;
b) eine Reihe von Öffnungen (1, 2, 14, 15) für den Flüssigkeitseintritt und/oder Flüssigkeitsaustritt;
c) wahlweise, mit erwähnter Laserablationskammer (5) über Schläuche verbundene, Mischkammern (4, 12);
d) voneinander unabhängige Pumpensysteme, die den erwähnten Öffnungen vorgeschaltet sind, wenn diese dem Flüssigkeitseintritt dienen, oder , die den erwähnten Öffnungen nachgeschaltet sind, wenn sie dem Flüssigkeitsaustritt dienen;
e) gegebenenfalls Absperrhähne (6) um Teile der erwähnten Anlage zu isolieren;
f) ein bewegliches Substrat (9), dass den Flüssigkeiten in der besagten Laserablationskammer (5) ausgesetzt ist;
g) eine Linse oder ein Linsensystem (8), zur Fokussierung von einem oder mehreren Lasern (7) auf das abzutragende Substrat (9);
enthält und bei der mindest ein zweiter Teil (B) aus
a) einer Laserablationskammer (35) mit einer Quartzröhre (32), zum Lenken und Vereinheitlichen eines Laserstrahls (37), in die eine oder mehr nanopartikelhaltige Flüssigkeiten eingeleitet werden;
b) eine Reihe von Öffnungen (31, 44, 45) zum Flüssigkeitseinlass und -auslass;
c) voneinander unabhängige Pumpensysteme (33), die den erwähnten Öffnungen vorgeschaltet sind, wenn diese dem Flüssigkeitseintritt dienen, oder , die den erwähnten Öffnungen nachgeschaltet sind, wenn sie dem Flüssigkeitsaustritt dienen; enthält und in der der erste Teil (A) und besagter Teil (B) so miteinender verbunden sind, dass ein Fluss von Teil (A) zu Teil (B) und von dort nach draußen ermöglicht wird oder aber besagte Teile (A) und (B) so angeordnet sind, dass ein Kreislauf möglich ist.

2. Eine Anlage wie in Anspruch 1 in der besagtes bewegliches Substrat (9) aus einem, um die Längsachse drehbaren und entlang derselben verschiebbarem Zylinder der einen Durchmesser zwischen 1-10 mm, vorzugsweise 4 mm, und eine Länge zwischen 10-100 mm, vorzugsweise etwa 50 mm, aufweist, besteht und, der entlang der Längsachse aus verschiednen Materialien besteht.

3. Die Anlage wie in Anspruch 1. und 2, beschrieben wobei das erwähnte Substrat (9) aus einem oder mehreren von folgenden Elementen besteht; Ag, Ti, TiO2, Au, Zn, Cu, Pt, Pd, Übergangsmetalle, ferromagnetische Materialien und/oder Oxide dieser Metalle und/oder Verbindungen dieser Metalle untereinander oder mit anderen Substanzen, Fluor Verbindungen z.B. Fluorite, sowie Selen und seinen Verbindungen,

4. Eine Anlage wie beschrieben 1. bis 3. bei der besagtes Substrat (9) sich komplett oder teilweise in besagter Laserablationskammer (5) befindet oder aber so außerhalb montiert ist, dass ein Teil, dank wasserdichter Öffnung, der Laserablationskammer (5) zugänglich ist.

5. Eine Anlage nach 1. bis 4. mit einem zweiten Teil (B) welches zusätzlich durch
a) eine Mischkammer (42), die durch einen Kanal mit der besagten einheitlichen Laserablationskammer (35) verbunden ist;
b) wahlweise über Absperrhähne (36) zum isolieren von Teilen der derselben Anlage verfügt;
c)wahlweise einen Spiegel vor besagter Quartzröhre (32) in besagter Laserablationskammer (35) besitzt;
gekennzeichnet ist.

6. Eine Anlage entsprechend Ansprüche 1 bis 5, in der besagter Kanal (13) eine Länge zwischen 1-10 mm, vorzugsweise 6 mm und/oder einen Durchmesser zwischen 0.5-10 mm, vorzugsweise 4 mm aufweist und in der das Linsensystem oder die Fokussierlinse (8) in einer Entfernung zwischen 2-40 cm, vorzugsweise zwischen 4-25 cm zum Substrat (9) positioniert wird und besagte Laserablationskammer (5) und/oder die homogene Laserablationskammer (35) eine Größe zwischen 1x1x6 mm und 10x10x60 mm, vorzugsweise 4x4x23 mm, aufweist und besagte Quartzröhre (32) einen Durchmesser zwischen 1-10 mm und vorzugsweise die maximal-kompatible Größe zur besagten homogenen Laserablationskammer (35) hat.

7. Eine Anlage entsprechend Ansprüchen 1 bis 6, in der die Größe der besagten Anlage entsprechend angepasst wurden um den Fluss der Flüssigkeiten in besagter Laserablationskammer (5) und/oder der homogenen Laserhalstionskammer (35) zu erhöhen.

8. Eine Anlage entsprechend Ansprüchen 1 bis 7, in der besagter Laser ein Nanosekundenlaser ist, der folgende Eigenschaften besitzt:
a) Eine Pulsdauer zwischen 3-60 ns, vorzugsweise zwischen 3-20 ns, noch wünschenswerter zwischen 3-10 ns;
b) dessen Wellenlänge sich nach dem abzutragenden Material und der Flüssigkeit in der der Abtragevorgang stattfindet richtet, aber immer noch in jeder anderen Wellenlänge für die die Flüssigkeit durchlässig ist benutzt werden kann. Vorzugsweise wird die besagte Wellenlänge zwischen 300-1100 nm liegen und die vorzugsweise besagten Wellenlängen sind 1064 nm, 532 nm oder 355 nm;
c) die Pulsenenergie zwischen 1 mJ und 1 J, vorzugsweise zwischen 10 mJ und 1 J, vorzugsweise zwischen 100 mJ und 1 J, liegt;
d) die wiederholrate zwischen 1 Hz und 5 kHz, vorzugsweise zwischen 10-30 Hz, liegt;
e) die Energiedichte, abhängig vom verwendeten Substrat und der verwendeten Flüssigkeit , vorzugsweise zwischen 1-100 J/cm2 liegt und das verwendete Substrat mit zylindrischer Form mit einer Rotationsfrequenz von 0.1-10 Hz um die Längsachse rotiert und sich mit einer Translationsbewegung zwischen 0.1-10 mm/s bewegt.

9. Eine Anlage nach einem der Ansprüche 1 bis 7 in der der besagte Laser ein Femtosekundenlaser mit folgenden Eigenschaften;
a) einer Pulsdauer zwischen 100-120 fs, vorzugsweise 120 fs;
b) einer Wellenlänge, die abhängig von der Flüssigkeit in der die Abtragung stattfindet, vorzugsweise um 800 nm;
c) einer Pulsenergie zwischen 10-400 µJ, vorzugsweise 40-200 µJ;
d) einer Wiederholungsrate zwischen 1 kHz und 5 kHz, vorzugsweise um 2 kHZ;
e) einer zu bestimmenden Energiedichte abhängig von der verwendeten Flüssigkeit und vom verwendeten Substrat, vorzugsweise zwischen 0.01-1 J/cm2 ist und besagtes Substrat (9) mit zylindrischer Form mit einer Rotationsfrequenz von 40-200 Hz um die Längsachse rotiert und sich mit einer Translationsbewegung zwischen 1-10 cm/s bewegt und besagtes Substrat (9) mit einer zwischen 2 mm und 1 cm dicken Flüssigkeitsschicht bedeckt ist.

10. Die Anlage nach einem der Ansprüche 1 bis 9, in der besagte Flüssigkeit, jede Flüssigkeit, organisch oder anorganisch, durchlässig für die Laserstrahlung, vorzugsweise aus Wasser, Alkoholen oder Mischungen aus beidem, oder ein polymerisierbares Fluid bestehend aus mindestens einem Lösemittel und einem Monomer , einem Makromer und/oder einem Präpolymer und besagtes Lösemittel Wasser, Alkohole, vorzugsweise Ethanol oder Methanol, Amide von Carboxysäuren, wie Dimethylsuloxid oder Methylethylketon, Ketone, zum Beispiel Aceton oder Cyclohexanon, Kvhlenwasserstoffe, zum Beispiel Toluol, Ether, zum Beispiel Tetrahydrofuran, THF, Dimethoxyethan, DME, oder Dioxan und halogenierte Kohlenwasserstoffe, zum Beispiel Trichloroethan und ebenfalls Mischungen aus geeigneten Lösemitteln, zum Beispiel Mischungen aus Wasser mit Alkohol, zum Beispiel wasser/Ethanol oder Wasser/Methanol ist, oder besagte Flüssigkeit ein oder mehrere Stabilisatoren, Biomoleküle zur Funktionalisierung, Vernetzer und verschiedene andere Nanopartikel oder Nanomaterialien enthält.

11. Die Prozedur zur Produktion von nanopartikelhaltigen ophtalmischen Geräten folgende Schritte umfasst:
a) das vorhandensein einer Anlage nach einem der Ansprüche 1 bis 10;
b) das Vorhandensein einer Flüssigkeit, wobei besagte Flüssigkeit, organisch oder anorganisch, durchlässig für die Laserstrahlung, vorzugsweise aus Wasser, Alkoholen, Kohlenwasserstoffen oder Mischungen davon ist, oder eine Flüssigkeit ist, die mindestens ein polymerisierbares Monomer und ein Lösemittel, ein Makromer und/oder ein Präpolymer enthält und besagtes Lösemittel Wasser, Alkohole, vorzugsweise Ethanol oder Methanol, Amide von Carboxysäuren, wie Dimethylsuloxid, diploler-aprotische Lösemittel, wie Dimethylsulfoxid oder Methylethylketon, Ketone, zum Beispiel Aceton oder Cyclohexanon, Kohlenwasserstoffe, zum Beispiel Toluol, Ether, zum Beispiel Tetrahydrofuran, THF, Dimethoxyethan, DME, oder Dioxan und halogenierte Kohlenwasserstoffe, zum Beispiel Trichloroethan ist und ebenfalls Mischungen aus geeigneten Lösemitteln, zum Beispiel Mischungen aus Wasser mit Alkohol, zum Beispiel Wasser/Ethanol oder Wasser/Methanol sind, oder besagte Flüssigkeit ein oder mehrere Stabilisatoren, Biomoleküle zur Funktionalisierung, Vernetzer und verschiedene andere Nanopartikel oder Nanomaterialien enthält;
c) das besagte Fluid in Kontakt mit einem Substrat (9) steht das aus einem oder mehreren Materialien ausgewählt aus Ag, Ti, TiO2, Au, Zn, Cu, Pt, Übergangsmetalle, ferromenetische Materialien und/oder Oxide dieser Metalle und/oder Legierungen dieser Metalle mit sich selbst oder anderen Substanzen, fluorierte Verbindungen z.B. Fluorite, Selen und seine Verbindungen besteht und das besagte Substrat beweglich ist;
d) das Senden eines Laserpulses auf besagtes Substrat, so dass der besagte Laserpuls einen Punkt auf der Substratoberfläche trifft, der sich, bei fester absoluter Position des Auftreffpunktes des Laserpunktes auf das Substrat, Stück für Stück verändert, wobei besagter Laser fest und besagtes Substrat beweglich ist, eine nanopartikelhaltige Flüssigkeit produziert, in der die besagten Nanopartikel aus einem oder mehreren Materialien wie besagtes Substrat (9) bestehen.
e) der Einlass von besagter nanoparikelhaltiger Flüssigkeit in besagte Mischkammer (12) in der sie gegebenenfalls mit einer weiteren Flüssigkeit aus der besagten Öffnung (15) vermischt wird oder in der eine Funktionalisierung der Nanopartikel durch eine Flüssigkeit aus besagter Öffnung (15) erfolgen kann, wobei besagte Flüssigkeit ein Stabilisator, eine Flüssigkeit die zur Funktionalisierung vorgesehene Biomoleküle enthält, eine Flüssigkeit, die weitere, verschiedene Nanopartikel und Nanomaterialien enthält oder jede beliebige anorganische oder organische Flüssigkeit sein kann;
f) gegebenenfalls der Eintritt von besagter nanopartikelhaltiger Flüssigkeit in die in Block B vorhandene homogene Laserablationskammer in die ein homogener Laserpuls geleitet wird, eine Flüssigkeit ergibt, die standartisierte Nanopartikel enthält
g) der Eintritt besagter Flüssigkeit, die standartisierte Nanopartikel enthält in besagte Mischkammer (42), in der gegebenenfalls eine Durchmischung mit einer anderen Flüssigkeit aus besagter Öffnung (45) stattfindet oder es zu einer Funktionalisierung von besagten standartisierten Nanopartikeln durch eine weitere Flüssigkeit aus besagter Öffnung (45) kommt, oder jede beliebige anorganische oder organische Flüssigkeit sein wobei besagte Flüssigkeit ein Stabilisator, eine Flüssigkeit die zur Funktionalisierung bestimmte Biomoleküle enthält, eine Flüssigkeit die andere, verschiedene Nanopartikel oder Nanomaterialien enthält kann, mit dem Ergebnis einer Flüssigkeit, die gegebenenfalls standartisierte und gegebenenfalls funktionalisierte Nanopartikel enthält;
h) gegebenenfalls besagte Flüssigkeit, die gegebenenfalls standardisierte und gegebenenfalls funktionalisierte Nanopartikel enthält einem Polymeriationsprozess unterszogen wird.

## Revendications

1. Installation pour la production d'un fluide comprenant des nano-particules, constitué de deux ou plusieurs blocs, où le premier bloc (A) est composé de:
a) une chambre d'ablation laser (5), irradié par une ou plusieurs impulsions laser (7), où un ou plusieurs fluides sont introduits;
b) une série d'ouvertures (1, 2, 14, 15) pour l'entrée et/ou la sortie des fluides;
c) éventuellement, des chambres de mélange (4, 12) reliés par l'intermédiaire de canaux de liaison (17) et (13) à ladite chambre d'ablation laser (5);
d) des systèmes de pompage (3) indépendants l'un de l'autre, placée en aval desdites ouvertures lorsque lesdites ouvertures sont fonctionnelles à l'entrée de liquide, placé en amont de ces ouvertures lorsque lesdites ouvertures sont fonctionnels pour la sortie de fluides;
e) le cas échéant, des robinets (6) pour isoler des parties de ladite installation;
f) un substrat mobile (9), exposé à des liquides présents dans la dite chambre d'ablation laser (5);
g) une lentille ou un système de lentilles (8) pour concentrer un ou plusieurs lasers (7) sur ledit substrat (9) destiné à être soumis à une ablation;
et où au moins un second bloc (B) est composé de:
a) une chambre d'ablation laser homogène (35), munie d'un tube de quartz (32) qui guide et uniformise un faisceau laser (37), où un ou plusieurs fluides comprenant des nano-particules sont introduites;
b) une série d'ouvertures (31, 44, 45) pour l'entrée et/ou la sortie des fluides;
c) des systèmes de pompage (33) indépendants l'un de l'autre, placées en aval desdites ouvertures lorsque lesdites ouvertures sont fonctionnelles à l'entrée de liquide, placé en amont de ces ouvertures lorsque lesdites ouvertures sont fonctionnels pour la sortie de liquide;
où ledit premier bloc (A) et ledit second bloc (B) sont intégrés ensemble, avec un écoulement dirigée de préférence de ce bloc (A) à le bloc (B) et à partir de ce est transporté à l'extérieur, ou le bloc (A) et ledit bloc (B) sont disposés de telle manière à permettre une remise en circulation entre eux.

2. L'installation selon la revendication 1, dans lequel ledit substrat mobile (9) est de préférence une tige cylindrique apte à tourner autour de son propre axe longitudinal et à se déplacer le long du même axe longitudinal et a un diamètre compris entre 1-10 mm, de préférence de 4 mm, et une longueur comprise entre 10-100 mm, de préférence d'environ 50 mm, et présente différente matériaux le long de son axe longitudinal.

3. L'installation selon l'une quelconque des revendications de 1 à 2, dans lequel ledit substrat (9) est constitué par une ou plusieurs matières choisies parmi Ag, Ti, TiO2, Au, Zn, Cu, Pt, Pd, les métaux de transition, les matériaux ferromagnétiques et/ou des oxydes de ces métaux et/ou composés de ces métaux entre eux ou avec d'autres substances, des composés fluorés, par exemple fluorite, le sélénium ou ses composés.

4. L'installation selon l'une quelconque des revendications de 1 à 3, dans lequel ledit substrat (9) est positionné en totalité ou en partie à l'intérieur de ladite chambre d'ablation laser (5), ou est positionné à l'extérieur de ladite chambre d'ablation laser (5), de telle manière qu'une partie de celle-ci est exposée à l'intérieur de la chambre d'ablation laser (5) grâce à une ouverture étanche appropriée.

5. L'installation selon l'une quelconque des revendications de 1 à 4 avec un second bloc (B) également **caractérisé par**:
a) une chambre de mélange (42) reliée par l'intermédiaire d'un canal de liaison (38) à ladite chambre d'ablation au laser homogène (35);
b) le cas échéant, des robinets (36) pour isoler des parties de les mêmes installations;
c) éventuellement, un miroir (34) placé dans ladite chambre d'ablation au laser homogène (35) à l'avant dudit tube de quartz (32).

6. L'installation selon l'une quelconque des revendications de 1 à 5, dans lequel ledit canal (13) a une longueur comprise entre 1-10 mm, de préférence d'environ 6 mm, et un diamètre compris entre 0,5-10 mm, de préférence d'environ 4 mm, et/ou ledit canal (38) a une longueur comprise entre 1-10 mm, un diamètre compris entre 0,5-10 mm, de préférence de 4 mm, et où ledit système de lentille ou la lentille de focalisation (8) est positionné à une distance à partir de la substrat (9) comprise entre environ 2-40 cm, de préférence entre environ 4-25 cm, et ladite chambre d'ablation laser (5) et/ou la chambre d'ablation laser homogène (35) ont des dimensions comprises entre 1x1x6 mm et 10x10x60 mm, de préférence 4x4x23 mm, et ledit tube de quartz (32) a un diamètre compris entre 1-10 mm et de préférence la taille maximale compatible avec ladite chambre par ablation laser homogène (35).

7. L'installation selon l'une quelconque des revendications de 1 à 6, où les dimensions décrites pour ladite installation sont mis à l'échelle de manière appropriée de façon à augmenter l'écoulement de fluide dans ladite chambre d'ablation laser (5) et/ou chambre d'ablation laser homogène (35).

8. L'installation selon l'une quelconque des revendications de 1 à 7, dans laquelle ledit laser est un laser nanoseconde avec les caractéristiques suivantes:
a) la durée d'impulsion de 3-60 ns, de préférence entre 3-20 ns, de préférence encore entre 3-10 ns;
b) la longueur d'onde est déterminé en fonction du matériau à ablater et du liquide dans lequel a lieu l'ablation, mais l'une des longueurs d'onde transmises par le liquid peut encore être utilisé, et de préférence ladite longueur d'onde se situe entre 300-1100 nm , de préférence la longueur d'onde est de 1064 nm ou de 532 nm ou 355 nm;
c) l'énergie d'impulsion comprise entre 1 mJ et 1 J, de préférence entre 10 mJ et 1 J, de préférence entre 100 mJ et 1 J;
d) le taux de répétition comprise entre 1 Hz et 5 kHz, de préférence entre 1-100 Hz, de préférence entre 10-30 Hz;
e) la fluence est déterminé en fonction du liquide et du substrat utilisé, de préférence entre 1-100 J/cm², et ledit substrat (9) présente une forme cylindrique et a une fréquence de rotation autour de son axe longitudinal entre 0,1-10 Hz et une vitesse de translation le long du même axe longitudinal comprise entre 0,1-10 mm/s.

9. L'installation selon l'une quelconque des revendications de 1 à 7, dans laquelle ledit laser est un laser femtoseconde avec les caractéristiques suivantes;
a) durée d'impulsion comprise entre 100-120 fs, de préférence d'environ 120 fs;
b) la longueur d'onde dépend du liquide où l'ablation a lieu, de préférence d'environ 800 nm;
c) l'énergie d'impulsion comprise entre 10-400 µJ, de préférence entre 40-200 µJ;
d) le taux de répétition comprise entre 1-5 kHz, de préférence d'environ 2 kHz;
e) fluence à déterminer en fonction du liquide et du substrat utilisé, de préférence entre 0,01-1 J/cm², et ledit substrat (9) présente une forme cylindrique et a une fréquence de rotation autour de son axe longitudinal entre 40-200 Hz et une vitesse de translation le long du même axe longitudinal compris entre 1-10 cm/s et ledit substrat (9) est recouverte d'une épaisseur de liquide entre 2 mm et 1 cm.

10. L'installation selon l'une quelconque des revendications de 1 à 9, dans laquelle ledit fluide est un fluide quelconque, organique ou inorganique, transparent au rayonnement laser, de préférence choisi parmi l'eau, des alcools, des hydrocarbures ou des mélanges de ceux-ci, ou est une composition liquide polymérisable comprenant au moins un solvant et un monomère, un macromère et/ou un prépolymère et ledit solvant est choisi parmi l'eau, des alcools, de préférence l'éthanol ou le methanol, les amides d'acides carboxyliques, tels que le diméthylformamide, les solvants aprotiques dipolaires tels que le diméthylsulfoxyde ou la méthyléthylcétone, des cétones, par exemple l'acétone ou la cyclohexanone, des hydrocarbures, par exemple le toluène, les éthers, par exemple le tétrahydrofuranne, THF, le diméthoxyéthane, DME, ou le dioxanne et les hydrocarbures halogènes, par exemple le trichloroéthane ainsi que les mélanges de solvants appropriés, par exemple des mélanges d'eau avec un alcool, par exemple eau/éthanol ou eau/méthanol, ou ledit fluide comprend un ou plusieurs agents stabilisants, des bio-molécules pour la fonctionnalisation, des agents de réticulation, d'autres nano-particules ou des nano-composés.

11. Procédure pour la fabrication de dispositifs ophtalmiques comprenant des nano-particules qui comprend les étapes suivantes:
a) la fourniture d'une installation selon l'une des revendications de 1 à 10;
b) la fourniture d'un fluide, où ledit fluide est un fluide quelconque organique ou inorganique transparent pour le rayonnement laser, de préférence choisi parmi l'eau, des alcools, des hydrocarbures ou des mélanges de ceux-ci, ou est une composition liquide comprenant au moins un monomère polymérisable et un solvant, un macromère et/ou un prépolymère et ledit solvant est choisi parmi l'eau, les alcools, de préférence l'éthanol ou le methanol, les amides d'acides carboxyliques, tels que le diméthylformamide, les solvants aprotiques dipolaires tels que le diméthylsulfoxyde ou la cétone d'éthyle de méthyle, des cétones, par exemple l'acétone ou la cyclohexanone, les hydrocarbures, par exemple le toluène, les éthers, par exemple le tétrahydrofuranne, THF, le diméthoxyéthane, DME, ou le dioxanne et les hydrocarbures halogènes, par exemple le trichloroéthane ainsi que des mélanges de solvants appropriés, par exemple des mélanges d'eau avec un alcool, par exemple eau/éthanol ou de l'eau/méthanol, ou ledit fluide comprend un ou plusieurs agents stabilisants, des biomolécules pour la fonctionnalisation, des agents de réticulation, d'autres nano-particules ou des nano-composés;
c) placer ledit fluide en contact avec un substrat (9) consistant en un ou plusieurs matériaux choisis parmi Ag, Ti, TiO2, Au, Zn, Cu, Pt, les métaux de transition, matériaux ferromagnétiques et/ou des oxydes de ces métaux et/ou des alliages de ces métaux entre eux ou avec d'autres substances, des composés de fluor, par exemple fluorine, sélénium ou ses composés, où ledit substrat est mobile;
d) l'envoi d'une impulsion laser sur le substrat, ladite impulsion laser va frapper un point sur la surface du substrat qui varie instant par instant, en se tenant la position absolue du point de rencontre entre le substrat et la tache laser fixé, où ledit laser est fixé et ledit substrat peut être déplacé, pour donner un fluide comprenant des nano-particules, dans laquelle lesdites nano-particules sont composées d'un ou plusieurs desdits matériaux qui forment ledit substrat (9);
e) l'entrée dudit fluide, comprenant les nano-particules, dans ladite chambre de mélange (12) où, le cas échéant, le fluide peut être mélangé avec un autre fluide provenant de ladite ouverture (15) ou où un fonctionnalisation desdites nano-particules peut se produire, à médiation par un fluide provenant de ladite ouverture (15), où ledit autre fluide entrant est choisi parmi un agent de stabilisation, un fluide contenant des biomolécules de fonctionnalisation, un fluide comprenant des autres et différents nano-particules ou des nano-composés, quelconque liquide organique ou inorganique;
f) éventuellement, l'entrée dudit fluide comprenant les nanoparticules dans ladite chambre d'ablation au laser homogène (35) présent dans ledit bloc (B), où une impulsion laser homogène est dirigé, en obtenant par conséquent un fluide qui comprend des nano-particules normalisées;
g) l'entrée dudit fluide, comprenant les nano-particules normalisées dans ladite chambre de mélange (42), où, éventuellement, un mélange avec un autre fluide provenant de ladite ouverture (45) ou une fonctionnalisation desdites nano-particules normalisées par un fluide provenant de ladite ouverture (45) peut se produire, où ledit autre fluide est choisi parmi un agent de stabilisation, un fluide contenant des biomolécules pour la fonctionnalisation, un fluide comprenant des autres et différents nano-particules ou des nano-composés, quelconque liquide organique ou inorganique, avec la réalisation d'un fluide, qui comprend des nano-particules éventuellement normalisés, éventuellement fonctionnalisé;
h) éventuellement, ledit fluide, qui comprend éventuellement standardisé, éventuellement fonctionnalisé nano-particules, peut subir un processus de polymérisation.
